# EUROPÄISCHE PATENTSCHRIFT

(11) **EP 1 531 073 B1**
(45) Veröffentlichungstag und Bekanntmachung des Hinweises auf die Patenterteilung: **04.04.2007**
(21) Anmeldenummer: 03104231.0
(22) Anmeldetag: 17.11.2003
(51) Int. Cl.: B60K 6/04, B60L 7/10

(54) **Verfahren zur Energierückgewinnung bei einem Fahrzeug**
Method for regenerating energy in a vehicle
Procédé de régénération d'énergie pour un véhicule

(43) Veröffentlichungstag der Anmeldung: 18.05.2005
(73) Patentinhaber: Ford Global Technologies, LLC, A subsidary of Ford Motor Company, Dearborn, MI 48126 (US)
(72) Erfinder: Schmitz, Peter, 52076, Aachen (DE); Busch, Rainer, 52076, Aachen (DE)
(74) Vertreter: Drömer, Hans-Carsten

(56) Entgegenhaltungen:
- EP-A- 0 433 603
- EP-A- 1 256 479
- DE-A- 10 035 027
- US-A1- 2002 148 144
- US-B1- 6 196 344
- US-B1- 6 543 565

## Beschreibung

Die Erfindung betrifft ein Verfahren zur Energierückgewinnung bei einem Fahrzeug mit zumindest einem Energiewandler und zumindest einer Energiespeichereinheit, wobei der Energiewandler von einem Steuergerät gesteuert wird.

Die US 6,543,565 B1, die den Oberbegriff des Anspruchs 1 definiert, betrifft ein Verfahren zur Steuerung eines regenerativen Bremsenergie in einem Fahrzeug mit einem Verbrennungsmotor und einem Elektromotor, umfassend:

Überführung des Fahrzeugs aus einem nicht-regenerativen Bremszustand in einen ersten regenerativen Bremszustand, wenn ein Fahrzeugsteuersystem einen regenerativen Bremszustand anfordert, wobei der Verbrennungsmotor mit dem Elektromotor verbunden ist,

Überführung des Fahrzeugs aus einem nicht-regenerativen Bremszustand in einen zweiten regenerativen Bremszustand, wenn ein Fahrzeugsteuersystem einen regenerativen Bremszustand anfordert, wobei der Verbrennungsmotor von dem Elektromotor getrennt ist,

Bestimmen, ob das Fahrzeugs von dem ersten regenerativen Bremszustand zu dem zweiten regenerativen Bremszustand überführt werden soll, nach dem das Fahrzeug aus dem nicht- regenerativen Bremszustand in den ersten regenerativen Bremszustand überführt wurde, und

Steuerung des regenerativen Bremsens um Störungen an einer Kraftübertragung während der Überführung von dem ersten regenerativen Bremszustand zu dem zweiten regenerativen Bremszustand auf ein Mindestmaß zu reduzieren, nach dem bestimmt wurde, dass das Fahrzeug von dem ersten regenerativen Bremszustand zu dem zweiten regenerativen Bremszustand überführt wird.

Die EP 0 433 603 A2 betrifft ein Verfahren zum Ermitteln eines den Fahrstil eines Fahrers charakterisierenden Fahrfaktors in einem mit einer Brennkraftmaschine angetriebenen Kraftfahrzeug.

Die US 6,378,636 B1 betrifft ein Steuerungssystem für ein Fahrzeug zur Bereitstellung eines negativen Drehmoments an einem Antriebsstrang mit einem Elektromotor. Das Steuerungssystem weist ein von einem Bediener durch einen Wegbereich von einer Ruhestellung bis zu einer Vollgasstellung bewegbares Beschleunigungsmittel und ein Mittel zur Übertragung an einen Fahrzeugsystemregler auf, wenn das Beschleunigungsmittel freigegeben ist. Zudem weist das Steuerungssystem ein Mittel zur Übertragung des Zustands des Antriebsstranges an den Fahrzeugsystemregler auf sowie ein Regelmodul innerhalb des Fahrzeugsystemreglers zum Empfangen eines Ausgangssignals des Mittels zur Übermittlung der Stellung des Beschleunigungsmittels und des Ausgangssignals des Mittels zur Übertragung des Zustands des Antriebsstranges auf. Das Regelmodul erkennt, wann das Beschleunigungsmittel in einer Freigabestellung und der Elektromotor die alleinige Drehmomentquelle für den Antriebsstrang ist. Das Steuerungssystem weist ein hierarchisches Strategiemittel für das Fahren im Schiebelauf auf. Dieses empfängt das Ausgangssignal des Regelmoduls und legt mit einer Vielzahl von Verfahren ein negatives Drehmoment für den Antriebsstrang des Fahrzeugs fest, wenn das Regelmodul erkennt, daß das Beschleunigungsmittel freigegeben wurde und der Elektromotor die alleinige Drehmomentquelle für den Antriebsstrang ist.

Die US 6,378,636 B1 betrifft aber auch ein Verfahren zur Bereitstellung eines negativen Drehmoments an einem Antriebsstrang eines Fahrzeugs mit einem Elektromotor. Dieses weist folgende Schritte auf: Freigeben eines von dem Bediener durch einen Wegbereich von einer Ruhestellung bis zu einer Vollgasstellung bewegbaren Beschleunigungsmittels; Übertragung eines Antriebsstrangzustands an den Fahrzeugsystemregler; Erkennen, wann der Elektromotor die einzige Drehmomentquelle für den Antriebstrang ist und Erkennen, wann das Beschleunigungsmittel in Freigabestellung ist; und Anweisen einer Strategie des Fahrens im Schiebelauf, wobei das negative Drehmoment an den Antriebsstrang des Fahrzeugs angelegt wird.

Die US 6,364,434 B1 offenbart ein Verfahren zur Anwendung eines Bremsmoments an einem Fahrzeug, wenn es ausläuft. Das Verfahren umfaßt die folgenden Schritte: Bestimmen ob ein Fahrzeug ausläuft, was durch eine Freigabe sowohl des Beschleunigungspedals als auch des Bremspedals angezeigt wird; Anwendung eines vorbestimmten Wertes des Auslaufbremsmomentes an besagtem Fahrzeug das empfänglich für eine Bestimmung ist, daß das Fahrzeug ausläuft; Festsetzen einer Zielgeschwindigkeit die mit der Fahrzeuggeschwindigkeit gleich ist, ungefähr zu der Zeit in der bestimmt wird, daß das Fahrzeug ausläuft; Ermitteln einer Fahrzeuggeschwindigkeit, nach dem die Zielgeschwindigkeit festgesetzt wurde und Vergleich der Fahrzeuggeschwindigkeit mit der Zielgeschwindigkeit und Steigern des Auslaufbremsmoments durch den vorbestimmten Wert, wenn die Fahrzeuggeschwindigkeit größer ist als die Zielgeschwindigkeit, wobei das Auslaufbremsmoment mit einem maximalen Auslaufbremsmomentgrenzwert verglichen wird, und der Schritt des Steigerns des Auslaufbremsmoments übergangen wird, wenn das Auslaufbremsmoment nicht kleiner ist als der maximale Auslaufbremsmomentgrenzwert.

Die EP 0 361 708 B1 betrifft ein Rekuperativ- und Reibungsbremssystem für ein Fahrzeug mit einem oder mehreren durch einen elektrischen Fahrmotor angetriebenen Rädern. Das Bremssystem besteht aus: einer auf den Fahrer reagierenden Vorrichtung, die ein Bremspedalbedarfsignal produziert, dessen Größenordnung dem vom Fahrer gewählten Grad der Bremskraft entspricht; einer Reibungsbremsbremsvorrichtung, die betriebsbereit mit einem oder mehreren Rädern des Fahrzeugs verbunden ist; einer Rekuperativ-Bremsvorrichtung die mit dem Elektro-Fahrmotor betriebsbereit verbunden ist; und Steuerungsmitteln zum Betrieb der Reibungsbremsvorrichtung und der Rekuperativ-Bremsvorrichtung. Zu den Steuerungsmitteln gehört folgendes: eine Vorrichtung, die bei drohendem Schleudern oder Rutschen der Räder das maximale Bremsmoment bestimmt, das durch beide Bremsvorrichtungen ohne verursachen von Schleudern oder Rutschen der Räder entwickelt werden kann, wobei zu der Vorrichtung eine Vorrichtung zur Bestimmung des Koeffizienten der Reibung zwischen mindestens einem der Räder und der Oberfläche, auf welcher das Kraftfahrzeug bewegt wird gehört, und eine Vorrichtung zur Berechnung von Bremsanweisungen für die Rekuperativ- und Reibungsbremsvorrichtungen auf der Grundlage des Bremspedalbedarfsignals und der festgelegten maximalen Bremsmomente, so daß die festgelegten maximalen Bremsmomente nicht überschritten werden.

Die EP 0 361 708 B1 betrifft aber auch ein Verfahren zum Einsatz von Rekuperativ- und Reibungs-Teilbremssystemen für ein Fahrzeug, bei dem ein oder mehr Räder durch einen elektrischen Fahrmotor angetrieben werden.

In modernen Fahrzeugen wird der effizienten Nutzung der verfügbaren Energie steigende Bedeutung beigemessen. Die steigenden Anforderungen an Sicherheits- und Komfortsysteme bewirken jedoch steigende Fahrzeuggewichte und verursachen damit höheren Energiebedarf bei gleichen Fahrleistungen. Neben der Effizienz der Antriebsstrangkomponenten beeinflußt die Fahrweise wesentlich den Energieverbrauch eines Fahrzeugs. Hierbei steht eine effiziente Fahrweise im Widerspruch zum Bedürfnis vieler Fahrer nach einer sportlichen Fahrweise, die gekennzeichnet ist durch hohe Beschleunigungs- und Verzögerungswerte. Bei der Verzögerung mittels konventioneller Betriebsbremse wird die kinetische Energie des Fahrzeugs in Wärme umgewandelt und geht damit verloren.

Der Erfindung liegt die Aufgabe zugrunde, ein verbessertes Verfahren zur Energierückgewinnung bei einem Fahrzeug zur Verfügung zu stellen, so daß so wenig Energie wie möglich verschwendet wird.

Erfindungsgemäß wird diese Aufgabe durch die Merkmale des Anspruchs 1 gelöst.

Der Erfindung liegt die Erkenntnis zugrunde, daß der Energieverbrauch eines Fahrzeugs von verschiedenen Einflußfaktoren, beispielsweise Rollwiderstand, Steigung, Luftwiderstand und Beschleunigungswiderstand abhängt. Der Energieverbrauch kann von dem Fahrer bisher lediglich durch Variation von Geschwindigkeit und Beschleunigung über einem vorgegebenen Entfernungsprofil beeinflußt werden. Wird beides auf dem niedrigsten Wert gehalten, wird am wenigsten Energie verbraucht. Die kinetische Energie eines Fahrzeugs bei einer bestimmten Geschwindigkeit wird am effizientesten genutzt, wenn diese vollständig zur Überwindung der Fahrwiderstände verwendet wird. Dies ist der Fall wenn der Fahrer niemals Energie z.B. durch Betriebsbremsungen verschwendet. Eine Vermeidung von Betriebsbremsungen wird aber höchst unwahrscheinlich von einem Durchschnittsfahrer hingenommen bzw. ist bei heutigem Verkehrsaufkommen kaum möglich.

Von daher stellt die Erfindung ein Verfahren mit einer von der Fahrweise eines Fahrers abhängigen Strategie zur Verfügung, mit dem bei dem Abbremsen des Fahrzeugs Energie zurückgewonnen und für einen späteren Gebrauch gespeichert wird, wobei eine Bremsenbenutzung durch den Fahrer minimiert wird. Eine Bremsung des Fahrzeugs um Energie zurückzugewinnen und für einen späteren Gebrauch zu speichern, wird allgemein als Energierückgewinnung bezeichnet, was ähnlich zu dem oft benutzten Begriff Rekuperativbremsen oder regeneratives Bremsen ist. Im folgenden soll der Begriff regeneratives Bremsen Verwendung finden.

Damit die Energie abhängig von der Fahrweise zurückgewonnen wird, ist es günstig im Sinne der Erfindung, wenn die Höhe des regenerativen Bremsmomentes mittels einer statistischen Analyse der Fahrparameter des Fahrers bestimmt wird. Fahrparameter sind zum Beispiel eine Bewegung des Mittels zur Beschleunigung zur Beschleunigung, was üblicherweise ein Gaspedal ist, und eines Mittels zur Bremsung, was ein herkömmliches Bremspedal sein kann. Ein weiterer Fahrparameter könnte die Beschleunigung des Fahrzeugs sein. Aus diesen Fahrparametern wird in dem Steuergerät eine dynamische Charakteristik des Fahrers mittels statistischer Analyse abgeleitet. Das Steuergerät generiert aus der dynamischen Charakteristik einen Dynamik Faktor, der einen Betrag zwischen 0 und 1 bzw. 0% und 100% annehmen kann.

Die dynamische Charakteristik, und damit der Dynamik Faktor, ist ein Indiz für die Fahrweise des Fahrers. Bei dem sportlichen Fahrer wird ein Dynamik Faktor von 1 bzw. 100%, und bei dem nicht sportlichen Fahrer ein Dynamik Faktor von 0 bzw. 0% abgeleitet. Selbstverständlich sind alle möglichen Dynamik Faktoren zwischen den Extrema möglich, was unterschiedliche Fahrweisen indiziert.

In dem Steuergerät ist weiterhin eine Kennlinie mit einem maximalen regenerativen Bremsmoment über einer Geschwindigkeit gespeichert. Hierbei wird einer Geschwindigkeit des Fahrzeugs ein maximales regeneratives Bremsmoment zugeordnet. Dieses maximale regenerative Bremsmoment wird in dem Steuergerät mit dem Dynamik Faktor zu dem anwendbaren regenerativen Bremsmoment vervielfacht. Von dem Steuergerät wird dieses anwendbare regenerative Bremsmoment als Steuersignal zur Erzeugung des Momentes an den Energiewandler übermittelt. Das anwendbare regenerative Bremsmoment wird zur Verfügung gestellt, sobald der Fahrer das Mittel zur Steuerung der Beschleunigung des Fahrzeugs freigibt.

Der Energiewandler ist bevorzugt ein Elektromotor. Bei Freigabe des Mittels zur Beschleunigung des Fahrzeugs wird als Moment bevorzugt ein Bremsmoment erzeugt. Der Energiewandler wird im Generatorzustand betrieben.

Wird der Energiewandler im Generatorzustand betrieben, wirkt dieser als Motorbremse. Bei einem sportlichen Fahrer, dem der Dynamik Faktor 1 zugeordnet wird, erhält der Energiewandler ein Steuersignal, welches dem maximalen regenerativen Bremsmoment entspricht. Dies bedeutet, daß der Energiewandler in dem Generatorzustand als Motorbremse ein größtes Bremsmoment erzeugt, wodurch das Fahrzeug sehr stark abgebremst wird. Damit verringert sich die Geschwindigkeit des Fahrzeugs, ohne daß der Fahrer das Mittel zur Bremsung des Fahrzeugs betätigen muß. Damit wird aber auch vermieden, daß die kinetische Energie des Fahrzeugs zum Beispiel weder an den Bremsen, noch durch einen auslaufenden Verbrennungsmotor oder ein anderes System verschwendet wird. Die im Generatorzustand erzeugte Energie wird vielmehr zweckmäßiger Weise dem Energiespeicher zugeleitet und gespeichert, so daß diese einer späteren Beschleunigung als zusätzliche Energie zur Verfügung steht. Von daher ist es zweckmäßig, wenn der Energiespeicher als Umkehrspeicher ausgestaltet ist. Wird der Energiewandler im Generatorzustand betrieben, wird der Energiespeicher mit einem Ladestrom geladen. Wird der Energiewandler dagegen als Motor betrieben, kann aus dem Energiespeicher zusätzliche Energie zur Beschleunigung abgezogen werden. Der Energiespeicher ist in üblicher Weise mit dem Energiewandler elektrisch verbunden.

Einem nicht sportlichen Fahrer wird der Dynamik Faktor 0 zugeordnet. Dies bedeutet, daß der Energiewandler in dem Generatorzustand kein Bremsmoment erzeugt, wodurch ein Abbremsen des Fahrzeugs durch den Energiewandler vermieden wird. Die kinetische Energie wird durch externe Fahrtwiderstände abgebaut. Das Fahrzeug rollt aus, womit die optimale Nutzung der kinetischen Energie erreicht wird.

Somit wird mit dem erfindungsgemäßen Verfahren ein maximaler Betrag kinetischer Energie abhängig von der Fahrweise des Fahrers zurückgewonnen. Zudem wird eine von dem Fahrertyp bzw. von der Fahrweise abhängige Strategie zur Rückgewinnung kinetischer Energie des Fahrzeugs zur Verfügung gestellt, mit der eine Minimierung von Bremsanwendungen durch den Fahrer erreicht wird. Der Betrag des anwendbaren regenerativen Bremsmomentes wird an die Fahrweise des Fahrers adaptiert.

Das erfindungsgemäße Verfahren kann bei jedem Fahrzeug mit einem Energiewandler und einer Energiespeichereinheit angewendet werden. Das Verfahren ist sowohl bei Fahrzeugen mit konventionellen als auch mit hybriden Antriebssystemen anwendbar. Weiterhin sind Applikationen in Brennstoffzellenfahrzeugen mit Energiespeichersystem sowie in Fahrzeugen mit jedem anderen Antriebsmedium wie z.B. Druckluft, oder Hydraulikmedien denkbar. Je größer die Leistungsfähigkeit des Antriebssystems ist, das aus dem Energiewandler und der Energiespeichereinheit besteht, desto effektiver wirkt das Verfahren und desto stärker wird es vom Fahrer wahrgenommen.

Weitere vorteilhafte Ausgestaltungen sind in den Unteransprüchen und der folgenden Figurenbeschreibung offenbart. Es zeigen:
- Fig. 1: eine Prinzipdarstellung eines Fahrzeugs mit Energiewandler und Energiespeichereinheit,
- Fig. 2: ein Flußdiagramm zur Darstellung der Verfahrensschritte.

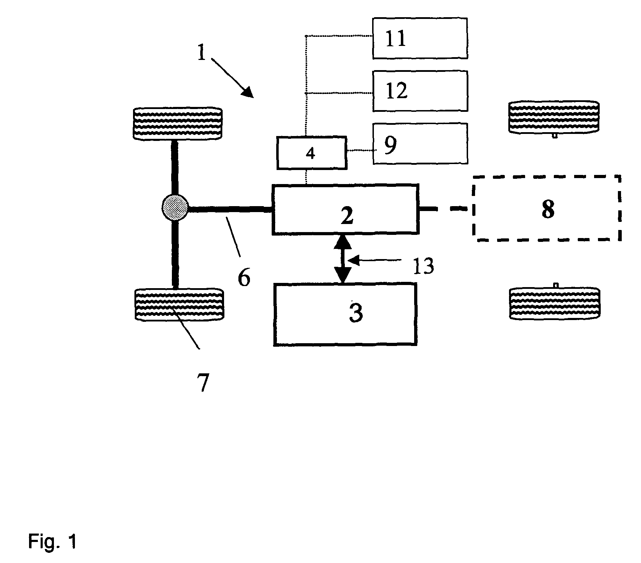

Figur 1 zeigt einen Ausschnitt aus einem Fahrzeug 1 mit einem Energiewandler 2 und einer Energiespeichereinheit 3. Das Fahrzeug 1 ist beispielhaft ein Elektrofahrzeug. Der Energiewandler 2 ist mit einem Steuergerät 4 über eine Steuerleitung 5 verbunden. In dem dargestellten Ausführungsbeispiel ist der Energiewandler 2 ein Elektromotor, der in herkömmlicher Weise im Motorzustand und im Generatorzustand betrieben werden kann. Der Energiewandler 2 wirkt auf einen Antriebsstrang 6 zum Antrieb von Rädern 7 des Fahrzeugs 1. Zusätzlich kann das Fahrzeug 1 ein weiteres Antriebssystem 8 aufweisen, das mit dem Energiewandler 2 zusammenwirkt. Das Antriebssystem 8 könnte ein Verbrennungsmotor sein, so daß ein Hybridfahrzeug dargestellt wäre. Das Antriebssystem 8 ist gestrichelt dargestellt.

Die Energiespeichereinheit 3 ist bevorzugt als Umkehrspeicher ausgestaltet, so daß dieser bei Betrieb des Energiewandlers 2 im Generatorzustand mit einem Ladestrom geladen wird und bei Betrieb des Energiewandlers 2 im Motorzustand gespeicherte Energie abgeben kann. Dies ist mittels des Doppelpfeils 13 dargestellt.

Das Steuergerät 4 nimmt Fahrparameter eines Fahrers des Fahrzeugs 1 auf. Ein möglicher Fahrparameter ist eine Fahrzeugbeschleunigung 9, eine Bewegung eines Mittels 11 zur Bremsung und eine Bewegung eines Mittels 12 zur Steuerung der Beschleunigung des Fahrzeugs 1. Das Mittel 11 zur Bremsung des Fahrzeugs ist bei dem dargestellten Ausführungsbeispiel ein Bremspedal. Das Mittel 12 zur Beschleunigung ist beispielhaft ein Gaspedal.

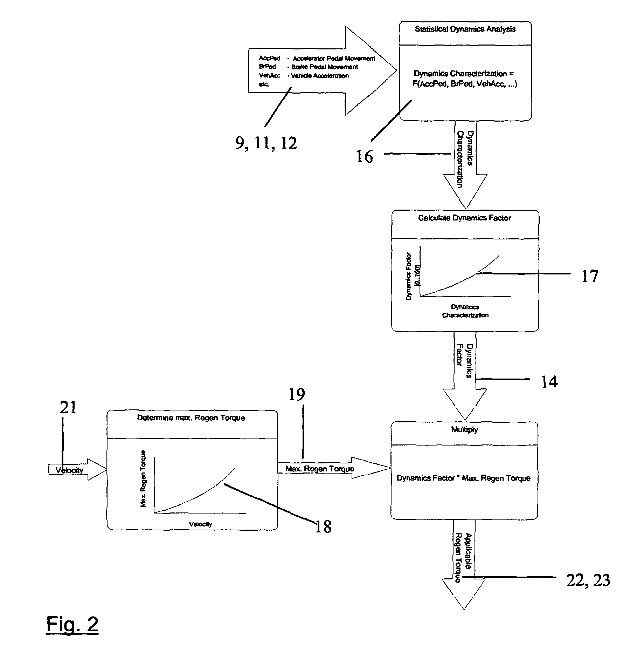

In dem Steuergerät 4 wird ein Dynamik Faktor 14 abgeleitet (Figur 2). Hierzu werden die Fahrparameter mittels einer statistischen Analyse zu einer dynamischen Charakteristik 16 abgeleitet. Die Dynamische Charakteristik 16 kann zum Beispiel aus einer statistischen Analyse einer Bewegungsamplitude des Gaspedals abgeleitet werden. Die dynamische Charakteristik 16 ist abhängig von einer Fahrweise eines Fahrers des Fahrzeugs 1. Einem sportlichen Fahrer wird eine hohe dynamische Charakteristik 16 zugeordnet, wobei einem nicht sportlichen Fahrer eine niedrige dynamische Charakteristik 16 zugeordnet wird. Bei dem sportlichen Fahrer wird das Fahrzeug rasant beschleunigt und mit hoher Geschwindigkeit bewegt sowie abrupt abgebremst.

In dem Speichergerät 4 ist eine Faktorkennlinie 17 mit einem im wesentlichen parabolischem Verlauf mit dem Dynamik Faktor 14 über der dynamischen Charakteristik 16 gespeichert. Hieraus wird der Dynamik Faktor 14 abgeleitet. Das bedeutet, daß dem sportlichen Fahrer ein Dynamik Faktor 1 bzw. 100% und dem nicht sportlichen Fahrer ein Dynamik Faktor 0 bzw. 0% zugeordnet wird.

Des Weiteren ist in dem Steuergerät 4 eine Kennlinie 18 mit einem maximalem regenerativen Bremsmoment 19 über einer Geschwindigkeit 21 gespeichert. Die Kennlinie 19 weist wie die Faktorkennlinie 17 einen im wesentlichen parabolischen Verlauf auf. Einer bestimmten Geschwindigkeit 21 wird ein bestimmtes maximales regeneratives Bremsmoment 19 zugeordnet. Aus diesem maximalen regenerativen Bremsmoment 19 wird durch Multiplikation mit dem Dynamik Faktor 14 ein Steuersignal 22 erzeugt.

Das Steuersignal 22 steuert den Energiewandler 2 und stellt einen Betrag eines anwendbaren regenerativen Bremsmomentes 23 dar. Bei einem sportlichen Fahrer wird das maximale regenerative Bremsmoment 19 mit dem Dynamik Faktor 1 multipliziert. Das anwendbare regenerative Bremsmoment 23 weist somit einen Betrag auf, der dem des maximalen regenerativen Bremsmomentes 19 entspricht. Bei einem nicht sportlichen Fahrer wird das maximale regenerative Bremsmoment 19 mit dem Dynamik Faktor 0 multipliziert. Das anwendbare regenerative Bremsmoment 23 weist somit einen Betrag 0 auf. Bei von diesen Maxima abweichenden Fahrweisen wird in dem Steuergerät 4 selbstverständlich ein entsprechender Dynamik Faktor 14 und somit ein entsprechendes Steuersignal 22, das einem entsprechenden Betrag des anwendbaren regenerativen Bremsmomentes 23 entspricht an den Energiewandler 2 geleitet. Beispielhaft wird bei einem Dynamik Faktor von 0,5 ein anwendbares regeneratives Bremsmoment 23 mit einem Betrag bestimmt, der einer Hälfte des maximalen regenerativen Bremsmomentes 19 entspricht.

Erhält der Energiewandler 2 das Steuersignal 22 mit einem Betrag, der dem maximalen regenerativen Bremsmoment 19 entspricht, wird der Energiewandler 2 im Generatorzustand mit maximaler Leistung betrieben. Der Energiewandler 2 erzeugt im Generatorzustand Energie, die in der Energiespeichereinheit 3 gespeichert wird. Im Generatorzustand wirkt der Energiewandler 2 als Motorbremse. Das Fahrzeug 1 wird daher bei der Freigabe des Gaspedals so stark abgebremst, daß eine Betätigung des Bremspedals nicht mehr notwendig ist. Somit wird bei einem sportlichen Fahrer ein hoher Betrag an Energierückführung erreicht, der bei einer folgenden Beschleunigung dem Energiewandler 2 wieder zur Verfügung steht. Entsprechend wird der Energiewandler 2 bei einem Dynamik Faktor 14, der größer 0 und kleiner 1 ist im Generatorzustand mit entsprechend niedriger Leistung betrieben. Hierdurch wird von der Fahrweise abhängig entsprechend wiedernutzbare Energie erzeugt, anstatt die kinetische Energie z.B. durch Bremsungen mittels des Bremspedals in Wärme umzuwandeln und damit zu dissipieren.

Bei einem nicht sportlichen Fahrer ist eine Abbremsung mittels einer Motorbremse (einem regenerativen Bremsmoment) nicht erforderlich. Die kinetische Energie des Fahrzeugs wird über externe Fahrwiderstände abgebaut, ohne daß das Bremspedal betätigt werden muss. Das Fahrzeug 1 rollt aus.

Zusammenfassend zeigt Figur 2 beispielhaft einen generischen Ansatz, wie ein anwendbares regeneratives Bremsmoment 23 für den Energiewandler 2 abgeleitet wird. Die Hauptschritte setzen sich hierbei aus einer statistischen Analyse von Messungen wie z.B. Fahrzeugbeschleunigung, Bewegung des Gas- bzw. Bremspedals; Berechnung des Dynamik Faktors 14; Bestimmung des maximalen regenerativen Bremsmomentes 19, welches beispielhaft von der Geschwindigkeit 21 abhängig ist; Multiplikation des maximalen regenerativen Bremsmomentes 19 mit dem Dynamik Faktor 14 zu dem anwendbaren regenerativen Bremsmomentes 23.

Somit wird ein Verfahren zur Verfügung gestellt, das einen derartigen Betrag an von der Fahrweise des Fahrers abhängigen regenerativen Bremsmomentes zur Verfügung stellt, daß eine Bremsung des Fahrzeugs 1 durch so seltene Benutzung des Bremspedals wie möglich erreicht wird, wobei gleichzeitig die kinetische Energie beispielsweise nicht durch Umwandlung in Wärme verschwendet wird. Vielmehr optimiert die Erfindung die Nutzung der Energie durch veränderliche regenerative Bremsmomente, die von der Fahrweise des Fahrers abhängig sind.

## Patentansprüche

1. Verfahren zur Energierückgewinnung bei einem Fahrzeug (1) mit zumindest einem Energiewandler (2) und zumindest einer Energiespeichereinheit (3), wobei der Energiewandler (2) von einem Steuergerät (4) gesteuert wird,
**dadurch gekennzeichnet, daß**
das Steuergerät (4) Fahrparameter eines Fahrers des Fahrzeugs (1) zu einem von einer Fahrweise des Fahrers abhängigen anwendbaren regenerativen Bremsmoment (23) ableitet, wobei der Energiewandler (2) von dem Steuergerät (4) bei einer Freigabe eines Mittels (12) zur Steuerung der Beschleunigung des Fahrzeugs (1) dazu veranlaßt wird, das anwendbare regenerative Bremsmoment (23) zu erzeugen, wobei in dem Steuergerät (4) einer Geschwindigkeit (21) ein maximales regeneratives Bremsmoment (19) zugeordnet wird, das mit einem Dynamik Faktor (14) zu dem anwendbaren regenerativen Bremsmoment (23) vervielfacht wird, wobei die Höhe des regenerativen Bremsmomentes (23) mittels statistischer Analyse der Fahrparameter des Fahrers bestimmt wird, und wobei aus diesen Fahrparametern in dem Steuergerät (4) eine dynamische Charakteristik (16) des Fahrers mittels statistischer Analyse abgeleitet wird, aus der der Dynamik Faktor (14) generiert wird.

2. Verfahren nach Anspruch 1,
**dadurch gekennzeichnet, daß**
der Dynamik Faktor (14) zu einem Betrag zwischen 0 bzw. 0% und 1 bzw. 100% abgeleitet wird.

3. Verfahren nach Anspruch 1 oder 2,
**dadurch gekennzeichnet, daß**
der Energiewandler (2) mit der Freigabe des Mittels (12) zur Steuerung der Beschleunigung von dem Steuergerät (4) ein Steuersignal (22) erhält, welches einem Betrag des anwendbaren regenerativen Bremsmomentes (23) entspricht, wodurch der Energiewandler (2) veranlasst wird bei einem Dynamik Faktor (14) mit einem Betrag größer 0 im Generatorzustand zu arbeiten.

4. Verfahren nach einem der vorhergehenden Ansprüche,
**dadurch gekennzeichnet, daß**
der Energiewandler (2) im Generatorzustand Energie erzeugt, welche der Energiespeichereinheit (4) zugeführt wird und in dieser gespeichert wird.

5. Verfahren nach einem der vorhergehenden Ansprüche,
**dadurch gekennzeichnet, daß**
der Energiewandler (2) im Generatorzustand als Motorbremse wirkt, so daß das Fahrzeug (1) abgebremst wird.

6. Verfahren nach einem der vorhergehenden Ansprüche,
**dadurch gekennzeichnet, daß**
der Energiespeicher (3) als Umkehrspeicher ausgestaltet ist, so daß die in ihm gespeicherte Energie dem Energiewandler (2) als zusätzliche Energie zur Verfügung gestellt wird, wenn dieser im Motorzustand betrieben wird.

## Claims

1. Method for recovering energy in a vehicle (1) having at least one energy converter (2) and at least one energy-storage unit (3), with the energy converter (2) being controlled by a controller (4),
**characterized in that**
the controller (4) derives driving parameters of a driver of the vehicle (1) to give an applicable regenerative braking torque (23) which is dependent on the driving style of the driver, with the controller (4) causing the energy converter (2) to generate the applicable regenerative braking torque (23) when a means (12) for controlling the acceleration of the vehicle (1) is released, with a maximum regenerative braking torque (19) being associated with a speed (21) in the controller (4) and this maximum regenerative braking torque being multiplied by a dynamics factor (14) to give the applicable regenerative braking torque (23), with the level of the regenerative braking torque (23) being determined by means of statistical analysis of the driving parameters of the driver, and with a dynamic characteristic (16) of the driver being derived from these driving parameters in the controller (4) by means of statistical analysis, and the dynamics factor (14) being generated from the said dynamic characteristic.

2. Method according to Claim 1,
**characterized in that**
the dynamics factor (14) is derived to give a value of between 0, or 0%, and 1, or 100%.

3. Method according to Claim 1 or 2,
**characterized in that**
the energy converter (2) receives a control signal (22), which corresponds to a value of the applicable regenerative braking torque (23), from the controller (4) when the means (12) for controlling the acceleration is released, as a result of which the energy converter (2) is made to operate in the generator state given a dynamics factor (14) with a value greater than 0.

4. Method according to one of the preceding claims,
**characterized in that**
the energy converter (2) generates energy in the generator state, and this energy is fed to the energy-storage unit (3) and stored therein.

5. Method according to one of the preceding claims,
**characterized in that**
the energy converter (2) acts as an engine brake in the generator state, so that the vehicle (1) is braked.

6. Method according to one of the preceding claims,
**characterized in that**
the energy-storage means (3) is designed as a reversible storage means, so that the energy stored therein is made available to the energy converter (2) as additional energy when the said energy converter is operated in the motor state.

## Revendications

1. Procédé de régénération d'énergie pour un véhicule (1) comprenant au moins un convertisseur d'énergie (2) et au moins une unité d'accumulation d'énergie (3), le convertisseur d'énergie (2) étant commandé par un appareil de commande (4),
**caractérisé en ce que**
l'appareil de commande (4) dérive des paramètres de conduite d'un conducteur du véhicule (1) pour produire un couple de freinage régénératif applicable (23) en fonction d'un mode de conduite du conducteur, le convertisseur d'énergie (2) étant autorisé par l'appareil de commande (4) dans le cas d'une libération d'un moyen (12) de commande de l'accélération du véhicule (1), à produire le couple de freinage régénératif applicable (23), un couple de freinage régénératif maximal (19) étant associé à une vitesse (21) dans l'appareil de commande (4) et étant multiplié par un facteur de dynamique (14) pour produire le couple de freinage régénératif applicable (23), l'amplitude du couple de freinage régénératif (23) étant déterminée par une analyse statistique des paramètres de conduite du conducteur, et une caractéristique dynamique (16) du conducteur étant dérivée de ces paramètres de conduite dans l'appareil de commande (4) au moyen d'une analyse statistique à partir de laquelle le facteur de dynamique (14) est produit.

2. Procédé selon la revendication 1,
**caractérisé en ce que**
le facteur de dynamique (14) est dérivé pour obtenir une valeur comprise entre 0 ou 0% et 1 ou 100%.

3. Procédé selon la revendication 1 ou 2,
**caractérisé en ce que**
le convertisseur d'énergie (2) reçoit un signal de commande (22) à la libération du moyen (12) de commande de l'accélération de l'appareil de commande (4), lequel signal correspond à une valeur du couple de freinage régénératif applicable (23), de sorte que le convertisseur d'énergie (2) est autorisé à fonctionner dans l'état de générateur pour un facteur de dynamique (14) ayant une valeur supérieure à 0.

4. Procédé selon l'une quelconque des revendications précédentes,
**caractérisé en ce que**
le convertisseur d'énergie (2) produit dans l'état de générateur de l'énergie qui est acheminée à l'unité d'accumulation d'énergie (3) et qui est accumulée dans celle-ci.

5. Procédé selon l'une quelconque des revendications précédentes,
**caractérisé en ce que**
le convertisseur d'énergie (2) agit dans l'état de générateur comme un frein moteur, de sorte que le véhicule (1) soit freiné.

6. Procédé selon l'une quelconque des revendications précédentes,
**caractérisé en ce que**
l'accumulateur d'énergie (3) est configuré sous la forme d'un accumulateur inverseur, de sorte que l'énergie accumulée à l'intérieur soit disponible sous forme d'énergie supplémentaire pour le convertisseur d'énergie (2) lorsque celui-ci fonctionne dans l'état moteur.
